# EUROPEAN PATENT SPECIFICATION

(11) **EP 2 132 460 B1**
(45) Date of publication and mention of the grant of the patent: **09.02.2011**
(21) Application number: 08719351.2
(22) Date of filing: 05.03.2008
(51) Int. Cl.: F16H 25/24

(54) **Linear actuator**
Linearstellglied
Actionneur linéaire

(30) Priority: 05.03.2007 IT BO20070149
(43) Date of publication of application: 16.12.2009
(73) Proprietor: Mecvel S.R.L., Via Due Portoni, 23 Bologna (IT)
(72) Inventor: VIVIANI, Roberto, I-40013 Castel Maggiore (IT)
(74) Representative: Jorio, Paolo
(86) International application number: PCT/IB2008/000673
(87) International publication number: WO 2008/107793

(56) References cited:
- WO-A-2006/034711
- DE-A1- 3 225 495
- DE-U1- 20 318 234
- FR-A- 2 839 352
- JP-A- 8 210 459

## Description

### TECHNICAL FIELD

The present invention relates to an improved linear actuator.

### BACKGROUND ART

As is known, linear actuators allow motion to be transmitted between a drive shaft and a rod suited to slide linearly. Linear actuators usually comprise a rod in which one portion consists of a leadscrew, a screw suited to engage the leadscrew, and a reducer responsible for transmitting the motion from the drive shaft to the screw and, thus, to the rod through the engagement of the screw-leadscrew assembly. Document JP08210459 represents the closest prior art and discloses all the features of the preamble of claim 1.

As the leadscrew is usually made of bronze alloy or plastic material, whereas the screw is made of steel, the thread of the leadscrew eventually wears out and is no longer able to engage properly with the thread of the screw. Unfortunately this wear is not visible from outside the actuator and the user only realises the thread is worn when the rod fails to execute its proper stroke and no longer guarantees precision in controlling the part being operated downstream of said rod. If the actuator is mounted vertically and the engagement of the screw-leadscrew assembly is damaged when performing a pull function, the rod could slip out and fall with the load with the relative risks to the safety of users and to the surrounding area as a whole.

This type of problem can occur regardless of the type of engagement between the screw and leadscrew that is damaged. For example, if the screw and leadscrew are of the recirculating ball type and one or more balls escape from their seats, there is still the risk of the rod slipping out and falling with the load.

### DISCLOSURE OF INVENTION

The purpose of the present invention is to produce an improved linear actuator in which the technical characteristics are such that the stability of the rod is guaranteed following damage to the engagement between the screw and leadscrew.

The present invention relates to a linear actuator comprising a rod suited to translate along an axis; a leadscrew integral with said rod; a screw that is rotatable about said axis and having a portion that engages with said leadscrew; said linear actuator being characterized in that it comprises a safety nut arranged coaxially in relation to said leadscrew and between said leadscrew and said rod to which it is fixed; said safety nut having a thread with a pitch similar to that of said leadscrew but smaller in length and thickness so that it only comes into contact with said screw when the engagement between the leadscrew and screw is damaged.

### BRIEF DESCRIPTION OF THE DRAWINGS

In order to better understand the present invention, a non-limiting preferred embodiment thereof will now be described by way of example with the help of the figures in the accompanying drawing, in which:
Figure 1 is a cross-section of the linear actuator according to the present invention with parts removed for the sake of clarity; and
figure 2 is an enlarged view of a detail of figure 1.

### BEST MODE FOR CARRYING OUT THE INVENTION

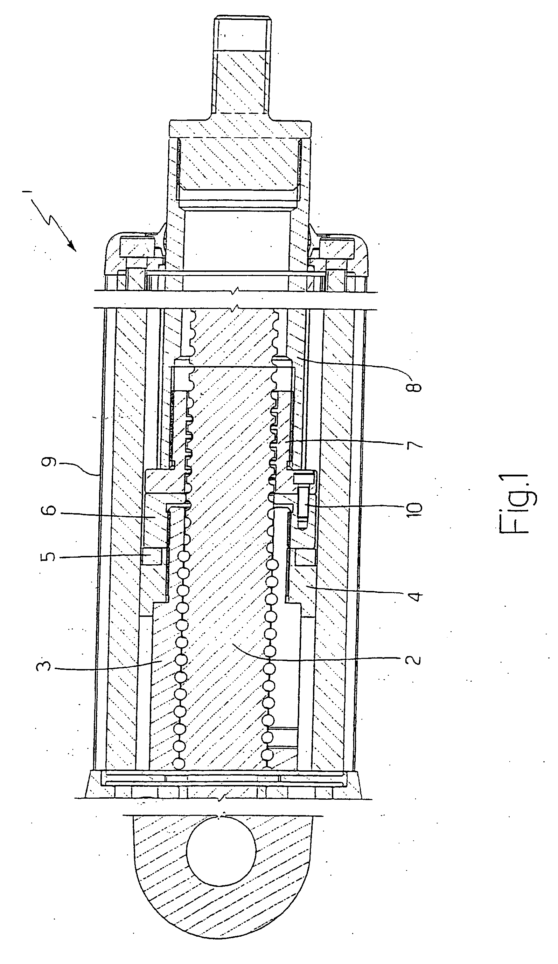

With reference to figure 1, number 1 indicates an overall linear actuator according to the present invention of which only the innovative part is illustrated.

The linear actuator 1 comprises a recirculating ball-type screw 2 that rotates about an axis X, a recirculating ball-type leadscrew 3 suited to engage with the screw 2, an anti-rotation element 4 fitted onto the leadscrew 3, a rare-earth magnetic ring 5 housed in a seat 5a obtained in the anti-rotation element 4, a coupling sleeve 6 which is also fitted onto the leadscrew 3 and at the same time arranged so as to rest against the rare-earth magnetic ring 5 to ensure the position thereof, a safety nut 7 fixed to the coupling sleeve 6 and coaxial in relation to the leadscrew 3, a cylindrical rod 8 arranged coaxially in relation to the safety nut 7 and suited to translate along the axis X, and a covering sleeve 9.

The safety nut 7 is fixed to the coupling sleeve 6 by means of a plurality of screws 10, of which only one is visible in figure 1, while the rod 8 is screwed to an axial end portion 7a of the safety nut 7.

In particular, the screw 2 and the safety nut 7 are made of steel.

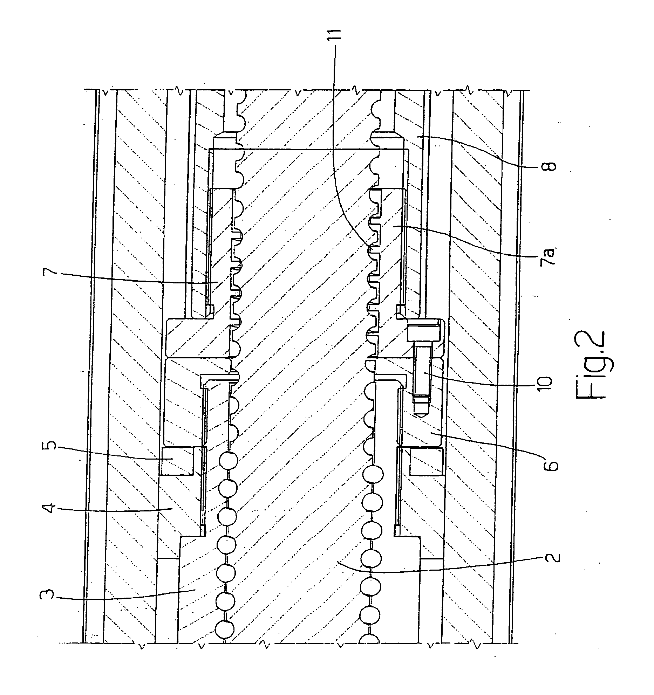

As illustrated in figure 2, the safety nut 7 has a square thread 11, the pitch of which is similar to that of the leadscrew 4 but smaller in height and thickness. In this way, the screw 2 only comes into contact with the thread 11 of the safety nut 7 when the engagement between the screw 2 and leadscrew 3 is damaged, for example due to one or more balls escaping from their seats and, since this is also made of steel, the contact causes a loud screeching sound and the blocking of the rod 8 warning the user of the problem.

The arrangement of the safety nut 7 guarantees the blocking of the rod 8 even when the engagement of the screw-leadscrew assembly is damaged. When the screw and leadscrew fail to engage because of the damage, the safety nut 7 is able to engage the screw 2, and since it is fixed to the rod 8 it blocks it without allowing it to slip out. Meanwhile, the screeching sound described above warns the user, who can restore the original engagement.

The advantages of the present invention are apparent from the above description.

In particular, when the engagement of the screw-leadscrew assembly is damaged, the linear actuator 1 ensures that no damage is caused to persons or objects due to the rod falling out.

It will be apparent to the person skilled in the art that the solution according to the present invention can be implemented in a linear actuator regardless of the type of screw and leadscrew that are used. For example if a trapezoidal screw and leadscrew are used, in case of wear on the thread of the leadscrew, the safety nut engages the screw, as described above, and guarantees the stability of the rod.

## Claims

1. Linear actuator (1) comprising a rod (8) suited to translate along an axis (X); a leadscrew (3) integral with said rod (8); a screw (2) rotatable about said axis (X) and having a portion that engages with said leadscrew (3); a safety nut (7) arranged coaxially in relation to said leadscrew (3) and between said leadscrew (3) and said rod (8); said safety nut (7) having a thread (11) with a pitch similar to that of said leadscrew (3) but smaller in length and thickness so that it only comes into contact with said screw (2) when the engagement between the leadscrew (3) and screw (2) is damaged; said linear actuator being **characterized in that** said safety nut (7) comprises an axial end portion (7a) to which one end of said rod (8) is screwed.

2. Linear actuator according to claim 1, **characterized in that** said screw (2) and said safety nut (7) are made of the same material.

3. Linear actuator according to claim 2, **characterized in that** said material is steel.

4. Linear actuator according to any one of the previous claims, **characterized in that** said thread (11) is a square thread.

## Patentansprüche

1. Linearstellglied (1) mit:
einer Stange (8), die dazu geeignet ist, eine Translationsbewegung entlang einer Achse (X) auszuführen;
einer mit der Stange (8) integral ausgebildeten Leitspindel (3);
einer Schraube (2), die um die Achse (X) drehbar ist und einen mit der Leitspindel (3) in Eingriff stehenden Abschnitt aufweist; und
einer Sicherheitsmutter (7), die bezüglich der Leitspindel (3) koaxial und zwischen der Leitspindel (3) und dem Stab (8) angeordnet ist;
wobei die Sicherheitsmutter (7) ein Gewinde (11) mit einem Gewindegang aufweist, der demjenigen der Leitspindel (3) ähnlich ist, aber eine kleinere Länge und geringere Dicke hat, so dass die Sicherheitsmutter nur dann mit der Schraube (2) in Kontakt kommt, wenn der Eingriff zwischen der Leitspindel (3) und der Schraube (2) beschädigt ist;
wobei das Linearstellglied **dadurch gekennzeichnet ist, dass**
die Sicherheitsmutter (7) einen axialen Endabschnitt (7a) aufweist, auf den ein Ende der Stange (8) geschraubt ist.

2. Linearstellglied nach Anspruch 1, **dadurch gekennzeichnet, dass** die Schraube (2) und die Sicherheitsmutter (7) aus dem gleichen Material hergestellt sind.

3. Linearstellglied nach Anspruch 2, **dadurch gekennzeichnet, dass** das Material Stahl ist.

4. Linearstellglied nach einem der vorangehenden Ansprüche, **dadurch gekennzeichnet, dass** das Gewinde (11) ein Rechteckgewinde ist.

## Revendications

1. Actionneur linéaire (1) comprenant une tige (8) adapté à effectuer une translation le long d'un axe (X) ; une vis sans fin (3) d'un seul tenant avec ladite tige (8) ; une vis (2) pouvant tourner autour dudit axe (X) et dont une partie entre en prise avec ladite vis sans fin (3) ; un écrou de sécurité (7) disposé coaxialement par rapport à ladite vis sans fin (3) et entre ladite vis sans fin (3) et ladite tige (8) ; ledit écrou de sécurité (7) est muni d'un filet (11) à pas analogue à celui de ladite vis sans fin (3) mais de longueur et d'épaisseur moindres de telle sorte qu'il vient seulement en contact avec ladite vis (2) lorsque le contact entre la vis sans fin (3) et la vis (2) est endommagé ; ledit actionneur linéaire étant **caractérisé en ce que** ledit écrou de sécurité (7) comprend une partie (7a) d'extrémité axiale sur laquelle une extrémité de ladite tige (8) est vissée.

2. Actionneur linéaire selon la revendication 1 **caractérisé en ce que**, ladite vis (2) et ledit écrou de sécurité (7) sont fabriqués à partir du même matériau.

3. Actionneur linéaire selon la revendication 2 **caractérisé en ce que**, ledit matériau est de l'acier.

4. Actionneur linéaire selon l'une quelconque des revendications précédentes **caractérisé en ce que**, ledit filet (11) est un filet carré.
